# EUROPÄISCHE PATENTSCHRIFT

(11) **EP 1 288 046 B1**
(45) Veröffentlichungstag und Bekanntmachung des Hinweises auf die Patenterteilung: **13.10.2004**
(21) Anmeldenummer: 02018528.6
(22) Anmeldetag: 17.08.2002
(51) Int. Cl.: B60J 7/20

(54) **Cabriolet-Fahrzeug**
Convertible vehicle
Véhicule convertible

(30) Priorität: 30.08.2001 DE 10142550
(43) Veröffentlichungstag der Anmeldung: 05.03.2003
(73) Patentinhaber: Wilhelm Karmann GmbH, D-49084 Osnabrück (DE)
(72) Erfinder: Markschläger, Gerd, 49082 Osnabrück (DE)

(56) Entgegenhaltungen:
- EP-A- 0 769 401
- DE-C- 948 121
- DE-C- 4 211 918
- US-A- 5 573 296

## Beschreibung

Die Erfindung bezieht sich auf ein Cabriolet-Fahrzeug mit in einem Verdeckkasten versenkbarem Faltverdeck gemäß dem Oberbegriff des Anspruchs 1.

Bei einem bekannten Cabriolet-Fahrzeug dieser Art (DE 296 02 762.6) weist die Fahrzeug-Karosserie im hinteren oberen Seitenrandbereich jeweilige von den Verdeckgestängeteilen durchgriffene Aussparungen auf, die durch ein als Abdeckplatte ausgebildetes Schiebeteil verschließbar sind. Das Schiebeteil wird dabei in seiner Bewegung durch eine direkte Anlage der Verdeckgestängeteile beim Öffnungs- bzw. Schließvorgang des Faltverdecks gesteuert. Gemäß einem Vorschlag in US 2,992,042 ist zur Bewegung einer Abdeckplatte ein aufwendiger Klappmechanismus mit einem separaten Antrieb vorgesehen und bei einem Cabriolet-Fahrzeug gemäß EP 0 836 960 A1 ist ein bei geöffnetem Verdeck aufsetzbares Hardtop vorgesehen, wobei die Verbindung des Hardtops zur Fahrzeugkarosserie im heckseitigen Bereich des Fahrzeuges nicht näher dargestellt ist.

Die Erfindung befaßt sich mit dem Problem, ein Cabriolet-Fahrzeug der angegebenen Art zu schaffen, bei dem das einfach bewegbare Schiebeteil mit geringem konstruktivem Mehraufwand an die karosserieseitige Aussparung so angepaßt ist, daß diese außer für den Durchgriff der Gestängeteile des Faltverdecks auch für eine Aufnahme von Tragteilen eines Hardtops geeignet ist.

Die Erfindung löst diese Aufgabe durch ein Cabriolet-Fahrzeug mit den Merkmalen des Anspruchs 1. Hinsichtlich wesentlicher weiterer Ausgestaltungen wird auf die Ansprüche 2 bis 14 verwiesen.

Das erfindungsgemäß ausgebildete Cabriolet-Fahrzeug weist im Bereich jeweils karosserieseitig ausgesparter Durchgriffsöffnungen für die seitlichen Gestängeteile ein Schiebeteil auf, dem in einem ersten Anwendungsfall mittels des Verdeckgestänges die an sich bekannte Öffnungs- bzw. Schließbewegung vermittelbar ist. Zusätzlich kann das Schiebeteil in einem zweiten Anwendungsfall unabhängig von den Verdeckgestängeteilen in eine zweite Öffnungsstellung verlagert, hier fixiert und in die Schließstellung zurückbewegt werden. Diese zweite Öffnungsstellung ist insbesondere bei Fahrzeugen mit einem bei geöffnetem Faltverdeck aufsetzbaren Hardtop von Interesse. Im Bereich unterhalb der freigebbaren Aussparung sind die für eine Hardtop-Abstützung vorgesehenen Bauteile in die Karosserie integriert, die mit dem neuen Schiebeteil abdeckbar und nach dessen Verlagerung besonders einfach zugänglich sind.

Dazu kann das Schiebeteil in zweckmäßig einfacher Ausführung von Hand über den Stellweg der ersten Öffnungsstellung hinweg bis in die zweite Öffnungsstellung verlagert und hier über ein entsprechendes Halteteil fixiert werden. Die damit freigegebene Aussparung ist so bemessen, daß jeweils die unterhalb der Karosserieseitenteile befindlichen Stützbaugruppen zugänglich sind und jeweilige Stützbolzen o. dgl. des Hardtops sind ohne zusätzliche Hilfswerkzeuge in die Verbindungsstellung einführbar. Nach dieser Verbindungsherstellung kann das Schiebeteil aus der Halteposition gelöst und mittels einer Rückstellfeder zumindest teilweise so zurückgeführt werden, daß eine optisch ansprechende Abdeckung erreicht ist. Ebenso erfolgt nach einer Demontage des Hardtops eine schnelle Rückführung des Schiebeteils in die Schließstellung.

Weitere Einzelheiten und vorteilhafte Ausgestaltungen der Erfindung ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine teilweise geschnittene perspektivische Heckansicht des Cabriolet-Fahrzeugs mit dem Faltverdeck in Schließstellung,
- Fig. 2: eine vergrößerte Heckansicht ähnlich Fig. 1 mit in einem Verdeckkasten versenktem Faltverdeck,
- Fig. 3: eine Perspektivdarstellung eines die karosserieseitige Aussparung für die Verdeckgestängeteile verschließenden Schiebeteils in Schließstellung,
- Fig. 4: eine Perspektivdarstellung ähnlich Fig. 3 mit einer direkten Anlage des Verdeckgestänges am Schiebeteil,
- Fig. 5: eine Perspektivdarstellung ähnlich Fig. 3 mit dem Schiebeteil in Öffnungsstellung,
- Fig. 6: eine Schnittdarstellung gemäß einer Linie VI-VI in Fig. 3 mit dem Schiebeteil in Schließstellung, und
- Fig. 7 und Fig. 8: eine jeweilige Schnittdarstellung ähnlich Fig. 6 mit dem Schiebeteil in unterschiedlichen Öffnungsphasen.

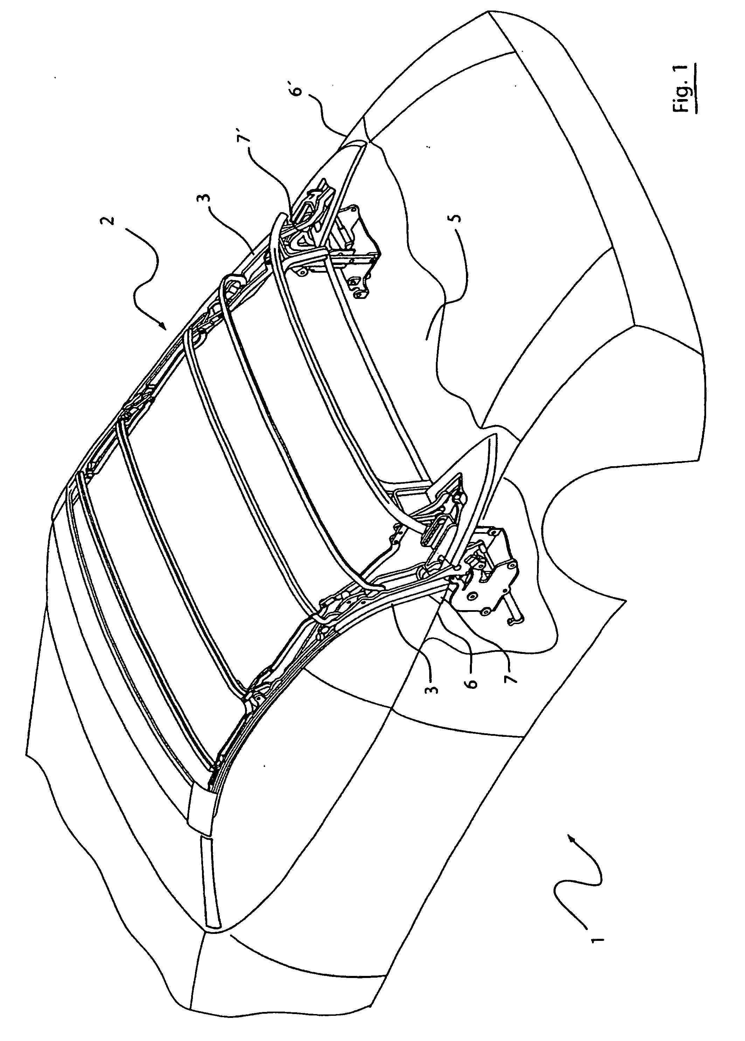

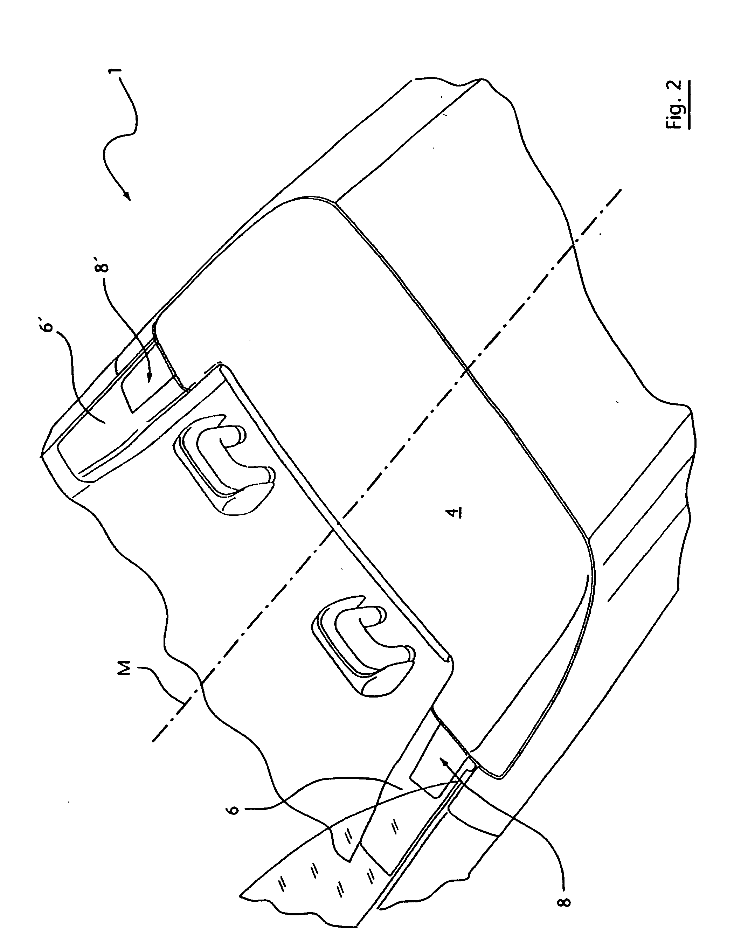

In Fig. 1 ist ein insgesamt mit 1 bezeichnetes Cabriolet-Fahrzeug in einer perspektivischen Heckansicht veranschaulicht. Das Cabriolet-Fahrzeug 1 weist ein in Schließstellung dargestelltes Faltverdeck 2 auf (dargestellt ohne Dachhaut), das mittels die Stellbewegung vermittelnder Verdeckgestängeteile 3 an beiden Längsseiten des Verdecks 2 in einem heckseitigen Verdeckkasten 5 in Öffnungsstellung ablegbar ist. Diese Öffnungsstellung des Fahrzeugs ist ausschnittsweise in Fig. 2 veranschaulicht, wobei über dem Verdeckkasten 5 ein Verdeckkastendeckel 4 dargestellt ist. Die seitlichen Verdeckgestängeteile 3 durchgreifen im Schließzustand (Fig. 1) bzw. beim Öffnungsoder Schließvorgang eine jeweils im oberen Seitenrandbereich 6, 6' der Fahrzeugkarosserie vorgesehene Aussparung 7, 7', die mit einer Abdeckplatte 8, 8' (Fig. 2) versehen ist. Diese Bauteile sind spiegelbildlich zur Fahrzeuglängsmittelebene M angeordnet, so daß nachfolgend nur noch die Baugruppen einer Fahrzeugseite beschrieben werden.

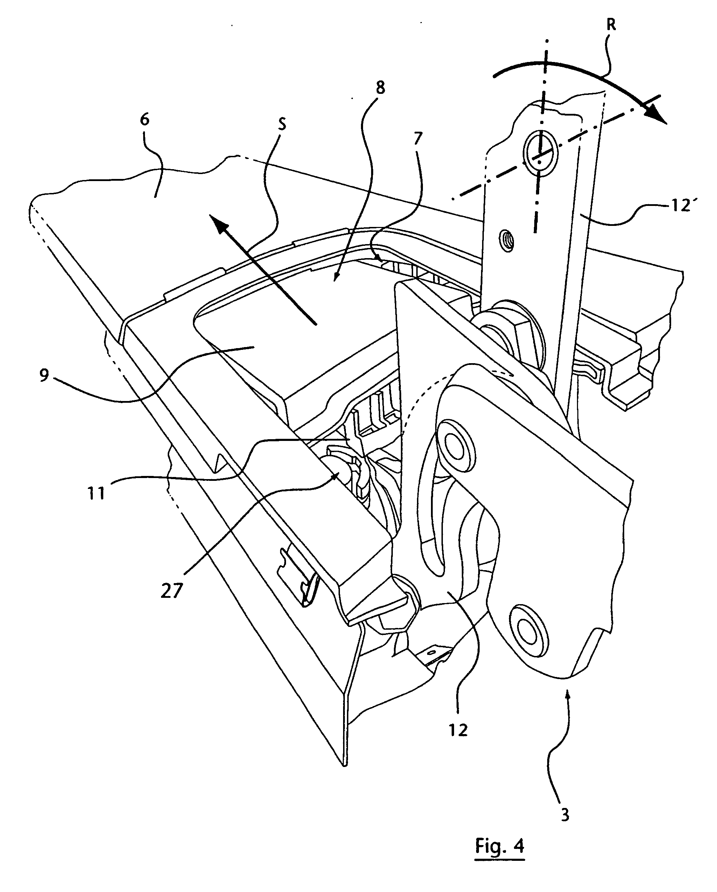

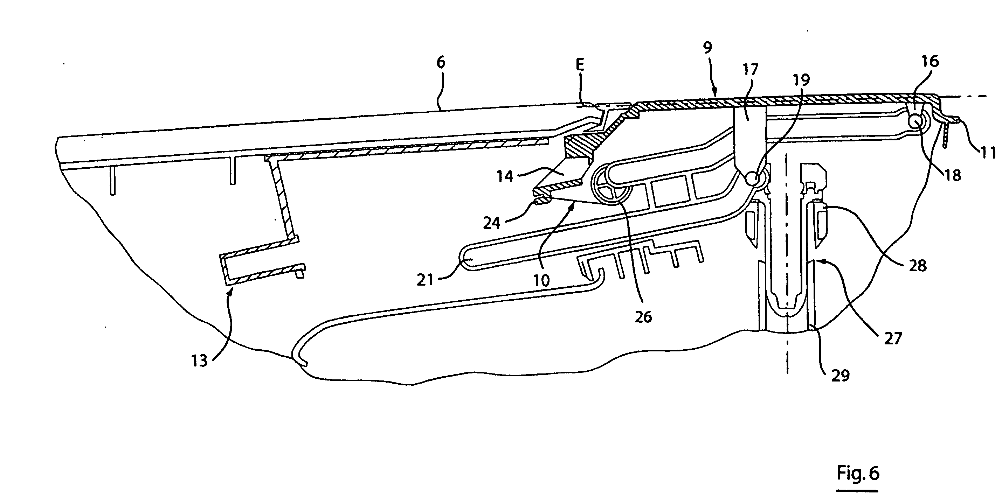

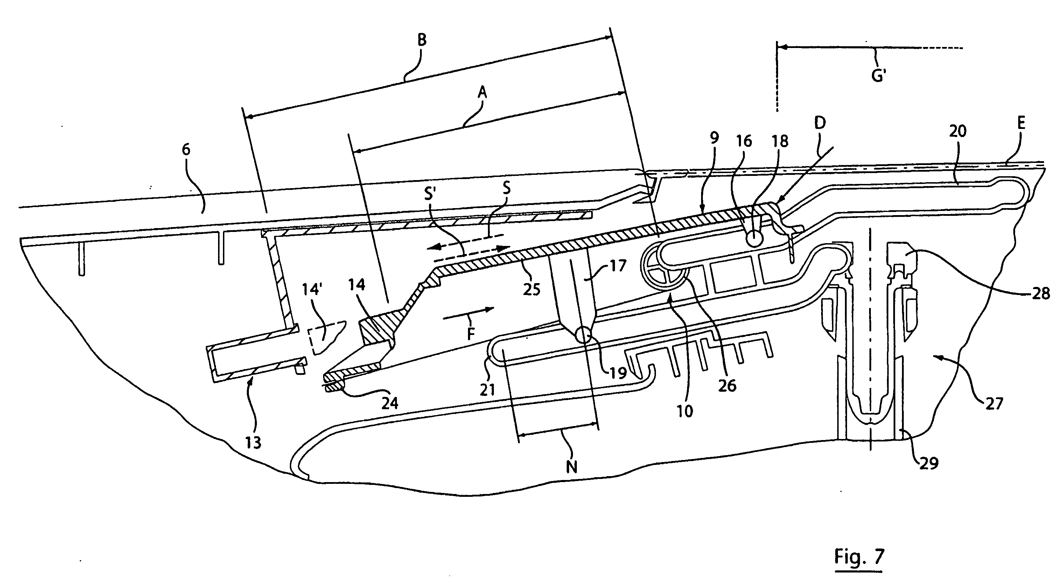

Die Abdeckplatte 8 ist insbesondere als ein mittels der Verdeckgestängeteile 3 verlagerbares Schiebeteil 9 (Fig. 4) ausgebildet, das aus seiner im wesentlichen horizontalen Schließebene E (Fig. 6) versetzbar ist, wobei ein Federorgan 10 (Fig. 7) gespannt wird und damit das Schiebeteil 9 selbsttätig in die Schließstellung (Fig. 6) rückführbar ist.

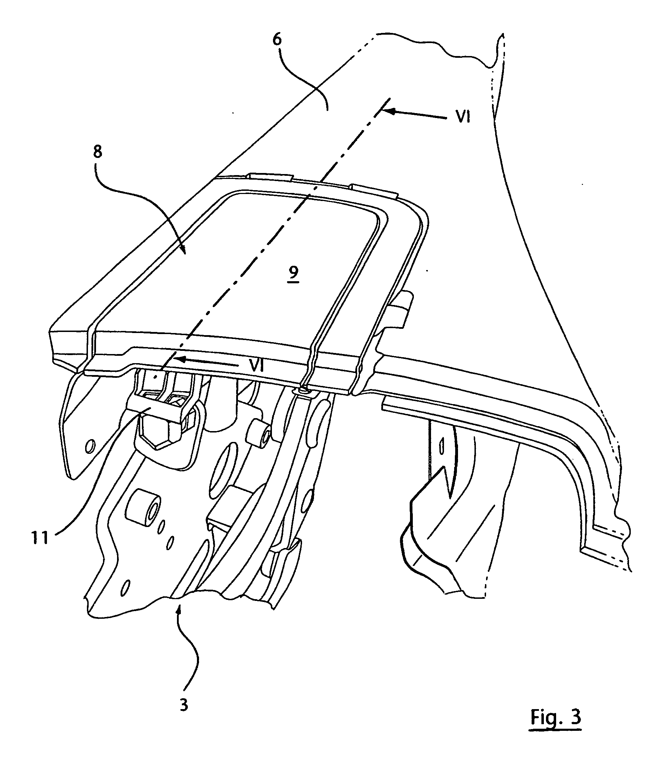

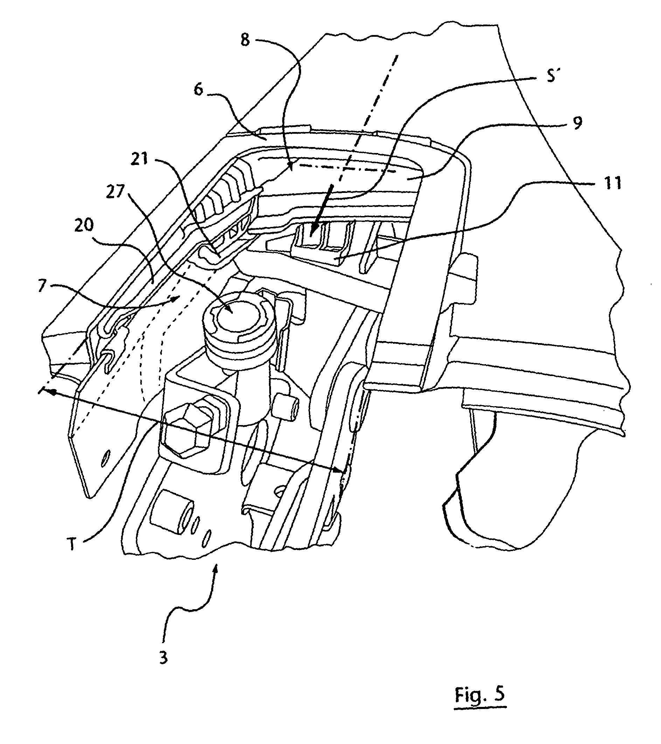

Ausgehend von der Schließstellung gemäß Fig. 3 verdeutlichen die Figuren 4 und 5 in jeweiligen Perspektivdarstellungen die Bewegungsphasen des Schiebeteiles 9, wobei an dessen stirnseitigem Druckteil 11 ein gemeinsam mit dem Verdeckgestänge 3 bewegbarer Lenkhebel 12 so anliegt (Fig.4), daß das Schiebeteil in einer Schubrichtung S (entgegen der Fahrtrichtung) nach vorn unter den oberen Seitenrandbereich 6 verlagert wird (Fig. 5). Beim Öffnen des Verdecks 2 wird das Schiebeteil 9 in einer Vorschubrichtung S' (Fig. 5) mittels des Federorgans 10 in die in Fig. 3 dargestellte Schließstellung zurückbewegt.

Ausgehend von dieser an sich bekannten Schließkonstruktion ist bei der erfindungsgemäßen Ausführung das Schiebeteil 9 so ausgildet, daß dieses unabhängig von der Positionierung der Verdeckgestängeteile 3 bzw. 12 in eine zweite Öffnungsstellung verlagerbar und aus dieser rückführbar ist.

In der Schnittdarstellung gemäß Fig. 7 ist (ausgehend von der Schließstellung gemäß Fig. 6) die Verlagerung des Schiebeteils 9 in die bei Bewegung der Verdeckgestängeteile (hier nicht dargestellt) bewirkte erste Öffnungsstellung dargestellt, wobei das Schiebeteil 9 in Vorschubrichtung S beispielsweise um einen Schiebeweg A weitgehend frei verschoben dargestellt ist. Aus der dabei erreichten Öffnungsstellung kann das Schiebeteil 9 in bekannter Ausführung unter Wirkung des die Rückholrichtung F aufweisenden Federorganes 10 dann zurückverlagert werden (Pfeil S'), wenn die Verdeckgestängeteile 3, 12, 12' zur Verlagerung des Verdecks 2 in die vorbeschriebene Öffnungsstellung verschwenkt werden (Pfeil R, Fig. 4).

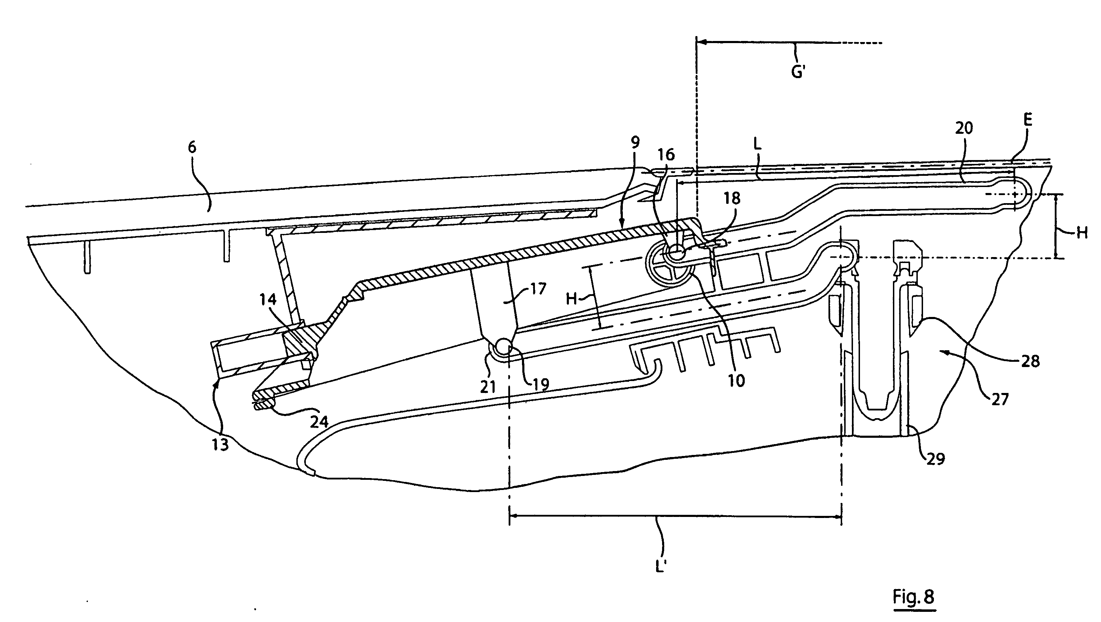

Für die Verlagerung des erfindungsgemäß ausgebildeten Schiebeteils 9 ist ein gegenüber A vergrößerter Schiebeweg B vorgesehen (Fig. 7), so daß das Schiebeteil 9 in eine zweite Öffnungsstellung gelangt. Das Schiebeteil 9 nimmt dabei eine die Rückstellwirkung des Federorgans 10 blockierende Lage gemäß Fig. 8 ein. In dieser Position ist ein karosseriefestes Rückhalteteil 13 wirksam, in das ein am Schiebeteil 9 befindliches Gegenglied 14 so eingreift, daß eine Verrastung der Teile erreicht ist und das Schiebeteil 9 in einer Daueroffenstellung verbleiben kann.

Diese Positionierung des Schiebeteils 9 in der zweiten Öffnungsstellung und auch die Entriegelung kann insbesondere von Hand ausgeführt werden, so daß auch bei diesem System zusätzliche Stellorgane entbehrlich sind.

Das von Hand ver- und entriegelbare Rückhalteteil 13 ist vorzugsweise als ein durch wiederholtes Drücken entriegelbares Druckstück (Schnappverschluß) ausgebildet, das in seiner an sich bekannten Konstruktion nicht näher dargestellt ist. In Fig. 7 ist mit einem Pfeil D die Einleitung einer Druckkraft mittels eines Fingers zur Bewegung und/oder Ver- bzw. Entriegelung des Schiebteils 9 dargestellt. Auf der linken Seite in Fig. 7 ist das Gegenglied 14' mit einer Strichdarstellung veranschaulicht, wobei mit dieser Position eine maximale Verschiebung deutlich wird, die beim Schließen des Verdecks 2 unter Anlage der Verdeckgestängeteile 3 am Schiebeteil 9 möglich ist, ohne dabei die Verbindung der Teile 13 und 14 herzustellen.

Das Schiebeteil 9 weist unterseitig, an beiden Seitenrändern (von denen nur einer in Schnittdarstellung sichtbar ist) jeweils zwei Stützstreben 16 und 17 auf, deren endseitige Führungsstifte 18, 19 in jeweilige karosseriefeste Führungsteile mit einer Nutkontur 20, 21 eingreifen (Fig. 8), so daß eine Abstützung nach Art einer Kulissenführung gebildet ist. Diese Führungsteile sind in ihrer Länge L, L' und der Nutkontur so bemessen, daß die Absenkung des Schiebeteils 9 aus der Schließebene E und die positionsgenaue Einführung des Gegengliedes 14 in das Rückhalteteil 13 erreicht werden. Das Schiebeteil 9 wird durch diese an beiden Seitenrändern doppelt wirksame Abstützung sicher geführt. Die beiden Nutkonturen 20, 21 sind vertikal und horizontal zueinander versetzt, wobei die vordere der Führungsnuten 21 mit einem Höhenabstand H (Fig. 8) unterhalb der hinteren Führungsnut 20 verläuft und sich die Führungsnuten bereichsweise übergreifen. Damit weist das Schiebeteil 9 insgesamt eine vorteilhaft flache Bauweise auf und kann mit geringem Raumbedarf in die Karosserie integriert werden. Bei Verlagerung des Schiebeteils 9 um den Führungsweg N (Fig. 7) gelangen die Führungsstifte 18, 19 in die zweite Öffnungsstellung und gleichzeitig wird das Gegenglied 14 am Rückhalteteil 13 eingerastet (Fig.8).

Die Prinzipdarstellungen gemäß Fig. 6 bis 8 verdeutlichen auch, daß als Federorgan 10 eine einerseits karosseriefest gehaltene und andererseits an einem Halteteil 24 an der Unterseite 25 des Schiebeteils 9 festgelegte Rollfeder 26 vorgesehen ist.

Mit der zweiten Öffnungsstellung des am Rückhalteteil 13 eingerasteten Schiebeteils 9 in Fig. 8 wird deutlich, daß dieses andererseits eine erweiterte Durchlaßöffnung G im Bereich der Schließebene E bildet, wie ein Vergleich mit G' in Fig. 7 zeigt. Damit wird in diesem Bereich eine unterhalb der Schließebene E befindliche Stützbaugruppe 27 so freigegeben, daß diese ungehindert für Tragteile eines oberen Dachteiles (nicht dargestellt) erreichbar ist. Die Stützbaugruppe 27 weist insbesondere eine zur Aufnahme eines Stützbolzens 28 eines nicht näher dargestellten Hardtops vorgesehene Steckbuchse 29 auf. Ebenso ist denkbar, daß im Bereich der erweiterten Durchlaßöffnung G' mehrere Stützbaugruppen (nicht dargestellt) angeordnet sind, wobei das Schiebeteil 9 in seiner Länge und/oder Breite T (Fig. 5) entsprechend bemessen ist und keine zusätzlichen Bauteile zur Freigabe der Stützbaugruppe 27 zu bewegen sind. Mit der vorbeschriebenen Konstruktion kann im Bereich des Schiebeteils 10 ohne zusätzlichen Stellaufwand oder Hilfswerkzeuge die Festlegung eines Hardtops an der Fahrzeugkarosserie besonders einfach erfolgen.

In zweckmäßiger Ausführung bildet das Schiebeteil 9 mit den zugeordneten Führungs- und Halteteilen eine in die Fahrzeugkarosserie bzw. Seitenverkleidung als Einheit einsetzbare und demontiere Baugruppe, mit der der Montageaufwand vorteilhaft verringert ist.

## Patentansprüche

1. Cabriolet-Fahrzeug mit in einem Verdeckkasten (5) versenkbarem Faltverdeck (2), dessen seitliche Verdeckgestängeteile (3; 12, 12') beim Öffnungs- bzw. Schließvorgang eine jeweils im oberen Seitenrandbereich (6) der Fahrzeugkarosserie vorgesehene Aussparung (7; 7')durchgreifen und dabei eine diese verschließende bzw. freigebende Abdeckplatte (8; 8') bewegen, die als ein aus einer im wesentlichen horizontalen Schließebene (E) in eine erste Öffnungsstellung versetzbares und mit einem Federorgan (10) rückstellbares Schiebeteil (9) ausgebildet ist, **dadurch gekennzeichnet, daß** das Schiebeteil (9) unabhängig von der Positionierung der Verdeckgestängeteile (3; 12, 12') in eine zweite Öffnungsstellung verlagerbar und aus dieser rückführbar ist.

2. Cabriolet-Fahrzeug nach Anspruch 1, **dadurch gekennzeichnet, daß** das Schiebeteil (9) von Hand verlagerbar ist.

3. Cabriolet-Fahrzeug nach Anspruch 1 oder 2, **dadurch gekennzeichnet, daß** das Schiebeteil (9) in der zweiten oder mehreren die Rückstellwirkung des Federorgans (10) blockierenden Öffnungsstellung(en) festlegbar ist.

4. Cabriolet-Fahrzeug nach einem der Ansprüche 1 bis 3, **dadurch gekennzeichnet, daß** das in der zweiten Öffnungsstellung festlegbare Schiebeteil (9) mit einem unabhängig von der Bewegung der Gestängeteile (3; 12, 12') entriegelbaren Rückhalteteil (13) zusammenwirkt.

5. Cabriolet-Fahrzeug nach einem der Ansprüche 1 bis 4, **dadurch gekennzeichnet, daß** das Rückhalteteil (13) mittels des von Hand betätigten Schiebeteiles (9) entriegelbar ist.

6. Cabriolet-Fahrzeug nach einem der Ansprüche 1 bis 5, **dadurch gekennzeichnet, daß** das von Hand ver- und entriegelbare Rückhalteteil (13) als ein einen Schnappverschluß aufweisendes Druckstück ausgebildet ist.

7. Cabriolet-Fahrzeug nach einem der Ansprüche 1 bis 6, **dadurch gekennzeichnet, daß** das Schiebeteil (9) unterseitig zwei jeweils seitlich vorstehende Stützstreben (16, 17) aufweist, die mit endseitigen Führungsstiften (18, 19) in ein jeweiliges karossiefestes Führungsteil (20, 21) mit Nutkontur eingreifen, derart, daß das Scheibeteil (9) an beiden Seitenrändern eine doppelte Abstützung aufweist.

8. Cabriolet-Fahrzeug nach Anspruch 7, **dadurch gekennzeichnet, daß** die beiden Führungsnuten (20, 21) vertikal und horizontal zueinander versetzt sind, wobei die vordere der Führungsnuten (21) mit einem Höhenabstand (H) unterhalb der hinteren Führungsnut (20) verläuft und diese die untere Führungsnut (21) bereichsweise übergreift.

9. Cabriolet-Fahrzeug nach einem der Ansprüche 1 bis 8, **dadurch gekennzeichnet, daß** als Federorgan (10) eine einerseits karosseriefest gehaltene und andererseits an einem Halteteil (24) an der Unterseite (25) des Schiebeteils (9) angreifende Rollfeder (26) vorgesehen ist.

10. Cabriolet-Fahrzeug nach einem der Ansprüche 1 bis 9, **dadurch gekennzeichnet, daß** das Schiebeteil (9) in der zweiten Öffnungsstellung eine erweiterte Durchlaßöffnung (G) im Bereich der Schließebene (E) bildet.

11. Cabriolet-Fahrzeug nach einem der Ansprüche 1 bis 10, **dadurch gekennzeichnet, daß** das Schiebeteil (9) im Bereich der erweiterten Durchlaßöffnung (G) eine unterhalb der Schließebene (E) befindliche Stützbaugruppe (27) für ein Verbindungsteil eines oberen Dachteiles freigibt.

12. Cabriolet-Fahrzeug nach Anspruch 11, **dadurch gekennzeichnet, daß** die Stützbaugruppe (27) jeweils eine zur Aufnahme eines Stützbolzens (28) eines Hardtops vorgesehene Steckbuchse (29) aufweist.

13. Cabriolet-Fahrzeug nach einem der Ansprüche 1 bis 12, **dadurch gekennzeichnet, daß** das Schiebeteil () in seiner Länge und/oder Breite (T) so bemessen ist, daß mehrere Stützbaugruppen (27) abdeckbar sind.

14. Cabriolet-Fahrzeug nach einem der Ansprüche 1 bis 13, **dadurch gekennzeichnet, daß** das Schiebeteil (9) mit den zugeordneten Führungs- und Halteteilen eine als Einheit in die Fahrzeugkarosserie einsetzbare und aus dieser demontierbare Baugruppe bildet.

## Claims

1. A convertible vehicle with a folding top (2) that can be lowered into a folding top compartment (5), wherein the lateral rod assembly parts (3; 12, 12') of said folding top respectively penetrate into openings (7; 7') provided in the upper lateral edge region (6) of the vehicle body during the opening and the closing process and simultaneously displace a cover plate (8; 8') that serves for exposing and covering said openings, and wherein said cover plate is realized in the form of a sliding part (9) that can be displaced from an essentially horizontal closing plane (E) into a first opening position and reset with the aid of a spring element (10), **characterized in that** the sliding part (9) can be displaced into and reset from a second opening position independently of the positioning of the rod assembly parts (3; 12, 12') of the folding top.

2. The convertible vehicle according to Claim 1, **characterized in that** the sliding part (9) can be displaced manually.

3. The convertible vehicle according to Claim 1 or 2, **characterized in that** the sliding part (9) can be fixed in the second or additional opening position(s), in which the resetting effect of the spring element (10) is blocked.

4. The convertible vehicle according to one of Claims 1-3, **characterized in that** the sliding part (9) that can be fixed in the second opening position cooperates with a retaining part (13) that can be unlocked independently of the movement of the rod assembly parts (3; 12, 12').

5. The convertible vehicle according to one of Claims 1-4, **characterized in that** the retaining part (13) can be unlocked by means of the manually actuated sliding part (9).

6. The convertible vehicle according to one of Claims 1-5, **characterized in that** the retaining part (13) that can be manually locked and unlocked is realized in the form of a pressure piece with a snap fastener.

7. The convertible vehicle according to one of Claims 1-6, **characterized in that** two supporting braces (16, 17) are arranged on the underside of the sliding part (9) and respectively protrude laterally from said sliding part, wherein the supporting braces respectively engage into a guide part (20, 21) of groove-shaped contour that is fixed on the vehicle body with guide pins (18, 19) arranged on their ends, namely in such a way that the sliding part (9) has a double support on both lateral edges.

8. The convertible vehicle according to Claim 7, **characterized in that** the two guide grooves (20, 21) are vertically and horizontally offset relative to one another, wherein the front guide groove (21) extends a vertical distance (H) underneath the rear guide groove (20) and this rear guide groove regionally overlaps the lower guide groove (21).

9. The convertible vehicle according to one of Claims 1-8, **characterized in that** the spring element (10) is realized in the form of a scroll spring (26), one end of which is rigidly held on the vehicle body and the other end of which engages on a holding part (24) on the underside (25) of the sliding part (9).

10. The convertible vehicle according to one of Claims 1-9, **characterized in that** the sliding part (9) forms an expanded through-opening (G) in the region of the closing plane (E) in the second opening position.

11. The convertible vehicle according to one of Claims 1-10, **characterized in that** the sliding part (9) exposes a support assembly (27) for a connecting part of an upper roof section in the region of the expanded through-opening (G), wherein said support assembly is situated underneath the closing plane (E).

12. The convertible vehicle according to Claim 11, **characterized in that** the support assembly (27) respectively contains a bushing (29) for receiving a supporting bolt (28) of a hardtop.

13. The convertible vehicle according to one of Claims 1-12, **characterized in that** the sliding part (9) has such a length and/or width (T) that several support assemblies (27) can be covered.

14. The convertible vehicle according to one of Claims 1-13, **characterized in that** the sliding part (9) and the assigned guiding and holding parts form a unit that can be installed into and removed from the vehicle body.

## Revendications

1. Véhicule cabriolet équipé d'une capote pliante (2) escamotable dans un compartiment de capote (5), dont les parties latérales d'arceaux (3 ; 12, 12') saisissent lors de l'opération d'ouverture ou de fermeture un évidement (7 ; 7') prévu respectivement dans la zone périphérique latérale (6) supérieure de la carrosserie du véhicule et déplacent à cette occasion une plaque de recouvrement (8 ; 8') verrouillant ou libérant cet évidement, laquelle plaque est conçue comme une partie coulissante (9) pouvant être déplacée à partir d'un plan de fermeture (E) sensiblement horizontal dans une première position d'ouverture et pouvant être reculée avec un organe à ressort (10), **caractérisé en ce que** la partie coulissante (9) peut être déplacée indépendamment du positionnement des parties d'arceaux de capote (3 ; 12, 12') dans une seconde position d'ouverture et peut être reculée à partir de cette position.

2. Véhicule cabriolet selon la revendication 1, **caractérisé en ce que** la partie coulissante (9) peut être déplacée à la main.

3. Véhicule cabriolet selon la revendication 1 ou 2, **caractérisé en ce que** la partie coulissante (9) peut être fixée dans la seconde ou plusieurs positions d'ouverture bloquant l'effet de rappel de l'organe à ressort (10).

4. Véhicule cabriolet selon l'une quelconque des revendications 1 à 3, **caractérisé en ce que** la partie coulissante (9) pouvant être fixée dans la seconde position d'ouverture coopère avec une partie de retenue (13) pouvant être déverrouillée indépendamment du déplacement des parties d'arceaux (3 ; 12, 12').

5. Véhicule cabriolet selon l'une quelconque des revendications 1 à 4, **caractérisé en ce que** la partie de retenue (13) peut être déverrouillée au moyen de la partie coulissante (9) actionnée à la main.

6. Véhicule cabriolet selon l'une quelconque des revendications 1 à 5, **caractérisé en ce que** la partie de retenue (13) pouvant être verrouillée et déverrouillée à la main est conçue comme une pièce de pression présentant une fermeture à emboîtement.

7. Véhicule cabriolet selon l'une quelconque des revendications 1 à 6, **caractérisé en ce que** la partie coulissante (9) présente côté inférieur deux montants d'appui (16, 17) dépassant à chaque fois sur le côté, qui s'engagent avec des ergots de guidage (18, 19) côté extrémité dans une partie de guidage (20, 21) respective et solidaire de la carrosserie avec un contour de rainure de telle sorte que la partie coulissante (9) présente un double soutien sur les deux bords latéraux.

8. Véhicule cabriolet selon la revendication 7, **caractérisé en ce que** les deux rainures de guidage (20, 21) sont décalées verticalement et horizontalement l'une par à rapport à l'autre, les rainures avant des rainures de guidage (21) étant agencées avec un espace en hauteur (H) au-dessous de la rainure de guidage (20) arrière et celle-ci recouvrant par endroit la rainure de guidage (21) inférieure.

9. Véhicule cabriolet selon l'une quelconque des revendications 1 à 8, **caractérisé en ce qu'**il est prévu comme organe à ressort (10) un ressort à col de cygne (26) maintenu d'une part de façon solidaire de la carrosserie et s'appliquant d'autre part sur une partie de retenue (24) sur le côté inférieur (25) de la partie coulissante (9).

10. Véhicule cabriolet selon l'une quelconque des revendications 1 à 9, **caractérisé en ce que** la partie coulissante (9) forme dans la seconde position d'ouverture une ouverture de passage (G) élargie dans la zone du plan de fermeture (E).

11. Véhicule cabriolet selon l'une quelconque des revendications 1 à 10, **caractérisé en ce que** la partie coulissante (9) libère dans la zone de l'ouverture de passage (G) élargie un ensemble de support (27) se trouvant au-dessous du plan de fermeture (E) pour une partie de liaison d'une partie de toit supérieure.

12. Véhicule cabriolet selon la revendication 11, **caractérisé en ce que** l'ensemble de support (27) présente respectivement une douille enfichable (29) prévue pour le logement d'un boulon de support (28) d'un toit amovible.

13. Véhicule cabriolet selon l'une quelconque des revendications 1 à 12, **caractérisé en ce que** la partie coulissante (9) est dimensionnée dans sa longueur et/ou sa largeur (T) de telle sorte que plusieurs ensembles de support (27) peuvent être recouverts.

14. Véhicule cabriolet selon l'une quelconque des revendications 1 à 13, **caractérisé en ce que** la partie coulissante (9) forme avec les parties de guidage et de retenue attribuées un ensemble pouvant être inséré comme unité dans la carrosserie du véhicule et pouvant être démonté de cette carrosserie.
